# EUROPEAN PATENT SPECIFICATION

(11) **EP 2 152 380 B1**
(45) Date of publication and mention of the grant of the patent: **13.06.2012**
(21) Application number: 08734549.2
(22) Date of filing: 25.04.2008
(51) Int. Cl.: B01D 33/00, B01D 33/044, B01D 33/048, B01D 33/073

(54) **A FILTRATION METHOD AND APPARATUS INCLUDING A ROLLER WITH PORES**
FILTRATIONSVERFAHREN UND -VORRICHTUNG MIT EINER ROLLE MIT POREN
PROCÉDÉ DE FILTRATION ET APPAREIL QUI COMPREND UN ROULEAU POREUX

(30) Priority: 25.04.2007 EP 07106918
(43) Date of publication of application: 17.02.2010
(73) Proprietor: Danmarks Tekniske Universitet (DTU), 2800 Lyngby (DK)
(72) Inventor: STUBBE, Peter, DK-3460 Birkerød (DK); HANSEN, Preben Bøje, DK-2820 Gentofte (DK)
(74) Representative: Høiberg, Susanne
(86) International application number: PCT/DK2008/050094
(87) International publication number: WO 2008/131780

(56) References cited:
- WO-A-03/055570
- WO-A-2006/002638
- DE-A1- 1 924 471
- JP-A- 56 073 514
- JP-A- 58 159 820
- US-A1- 2003 146 174

## Description

### Technical field of the invention

The present invention relates to the field of filtering, more precisely the present invention concerns a method and an apparatus for the separation of dry matter from a medium and the use of said method and apparatus.

### Background of the invention

Separation of dry matter from liquid is known in the art. Methods such as precipitation, centrifugation and filtering are commonly used for separation purposes in a vast number of industries. The latter separation method is relevant for the present invention.

Several problems concerning the separation of dry matter from liquid exist. In precipitation the particles in the liquid precipitate. Often a precipitation agent is added to the liquid. After precipitation the dry matter is situated on the bottom as sludge, wherein the sludge will still comprise a good deal of liquid, particularly in the area between the sludge and the liquid.

Centrifugation is a accelerated type of precipitation, where agents aiding the separation is also added. Centrifugation is a very expensive separation method.

When filtering liquids having a high dry matter content there are significant problems concerning accumulation of dry matter on the filter. This accumulation is known as the filter cake. In conventional methods the filter cake will grow until further filtering is impossible and the filter then has to be cleaned. There are various techniques for limiting the filter cake. One such technique is cross-flow. Here, the suspension (feed stream) is made to move along the filter in such a way that the filter cake is forced to move along by the stream. Another method is back flushing. Here, the movement of the suspension is reversed to lift the filter cake from the filter.

When using the cross-flow or back flushing methods the filter cake is not accumulated on the filter but is accumulated in the suspension. This requires the filtering process to be either stopped or for the existence of an outlet for the accumulated dry matter. In the latter situation the removed dry matter will still have a relatively high liquid content.

A further filtering method is flushing. The filtering process is stopped and the filter is washed. Here, the dry matter is accompanied by a lot of liquid.

In "Filtration and Separation", 1988 (improving cake de-watering) a system for the removal of water from sludge is described. The sludge is led pass a transport convey belt for partial dehydration. Hereafter, the sludge is led between 2 layers of synthetic filters, which in a continuing process is pressed through rollers. The first transport convey belt is not passed through the sludge suspension.

WO 03/055570 describes a method and an apparatus for separating dry matter from liquid, comprising providing an enclosed separation environment capable of being pressure regulated, and in said enclosed separation environment contacting at least one filter with a suspension accumulating dry matter on the at least one filter and passing the at least one filter through at least one set of solid impermeable rollers.

US20030146174A1 concerns a method and an apparatus for separating dry matter from liquid, comprising providing an enclosed separation environment capable of being pressure regulated, and in said enclosed separation environment contacting at least one filter with a suspension accumulating dry matter on the at least one filter and passing the at least one filter through at least one set of rollers, whereby liquid is removed from the at least one filter, followed by removing the substantially dry filter cake from the at least one filter, wherein the above is performed in the same enclosed separation environment either under vacuum or overpressure.

WO06002638A1 related to an apparatus for continuous separation of dry matter from a fluid, comprising an enclosed environment capable of being under vacuum or under positive pressure, in which enclosed environment a number of rollers form a chamber which is divided into two or more compartments by filtration means, wherein one or more filtrated chambers are placed on the pure side of the filter means. In order to allow for cleaning and/or maintenance of the filtrate chambers, additional filtrate chambers are provided, which are separated from the first filtrate chambers by a wall. One of the filtrate chambers at any time is placed under the filter, while the other filtrate chambers are situated outside the enclosure for maintenance/cleaning.

JP58159820A2 describes a continuous filter for performing a continuous filtration of raw liquid and an automatic cleaning of filter cloth, by traveling the filter cloth around respective rolls used for pressing, intermediate, filtering, and intermediate cake-transferring in sequence, and taking the cake sticking onto the intermediate transferring roll into the inside of a scraper.

JP56073514A2 describes a continuous filter for improving the efficiency of filtration by making it possible to filtrate a waste solution from a bottle washer, etc., continuously while using the outer circumferential surface of a filter cylinder as area for filtration.

### Summary of the invention

The present invention relates to an improved filtering method and system for use in a variety of applications. In a first aspect the invention relates to a method for separating dry matter from a medium, comprising the steps of
- providing a separation chamber at least partly defined by a plurality of rollers, wherein said chamber is capable of being pressure regulated, and wherein at least one of said rollers is a pore roller having a surface with pores allowing permeability for the medium, and furthermore having at least one channel for guiding the filtrate to the filtrate outlet, said channel being in fluid contact with the pores of the surface,
- arranging at least one filter belt so that it passes between at least one set of rollers consisting of a pore roller and one other roller,
- establishing a pressure difference across the at least one filter means,
- contacting at least one filter belt with a suspension of dry matter and medium accumulating dry matter on the at least one filter belt,
- obtaining a filter cake on said filter belt, and
- passing the at least one filter belt and filter cake through said at least one set of rollers, whereby medium is separated from the filter cake,
- optionally removing filter cake from the at least one filter belt.
In another aspect the invention relates to a method for separating dry matter from a medium, comprising the steps of
- providing a separation chamber at least partly defined by a plurality of rollers, wherein said chamber is capable of being pressure regulated, and wherein at least one of said rollers is a pore roller having a surface with pores allowing permeability for the medium and furthermore having at least one channel for guiding the filtrate to the filtrate outlet, said channel being in fluid contact with the pores of the surface,
- arranging at least one filter means so that a filter cake passes between at least one set of rollers, said one set of rollers consisting of a pore roller and one other roller,
- establishing a pressure difference across the at least one filter means,
- contacting the at least one filter means with a suspension of dry matter and medium accumulating dry matter on the at least one filter means,
- obtaining a filter cake on said filter means, and
- passing the at least one filter means and filter cake through said at least one set of rollers, whereby medium is separated from the filter cake,
- optionally removing filter cake.
In another aspect the invention relates to a apparatus for the separation of dry matter from a medium, comprising
- a separation chamber at least partly defined by a plurality of rollers, wherein said chamber is capable of being pressure regulated, and wherein at least one of said rollers is a pore roller having a surface with pores allowing permeability for the medium, and furthermore having at least one channel for guiding the filtrate to the filtrate outlet, said channel being in fluid contact with the pores of the surface,
- at least one filter means, such as a filter belt, arranged so that it passes between at least one set of rollers consisting of a pore roller and one other roller,
- means for establishing a pressure difference across the at least one filter means,
- means for contacting at least one filter means, such as a filter belt, with a suspension of dry matter and medium, and
- means for passing the at least one filter means and filter cake through said at least one set of rollers,
- optionally means for removing filter cake, for instance means for removing filter cake from the at least one filter means.

By using the method and/or apparatus of the invention a substantially dry filter cake is obtained. In a further aspect of the invention the use of such substantially dry filter cake or the medium is within the scope of the invention.

The present invention further focuses on the use of the above method and apparatus in a variety of separation purposes, see below.

### Drawings

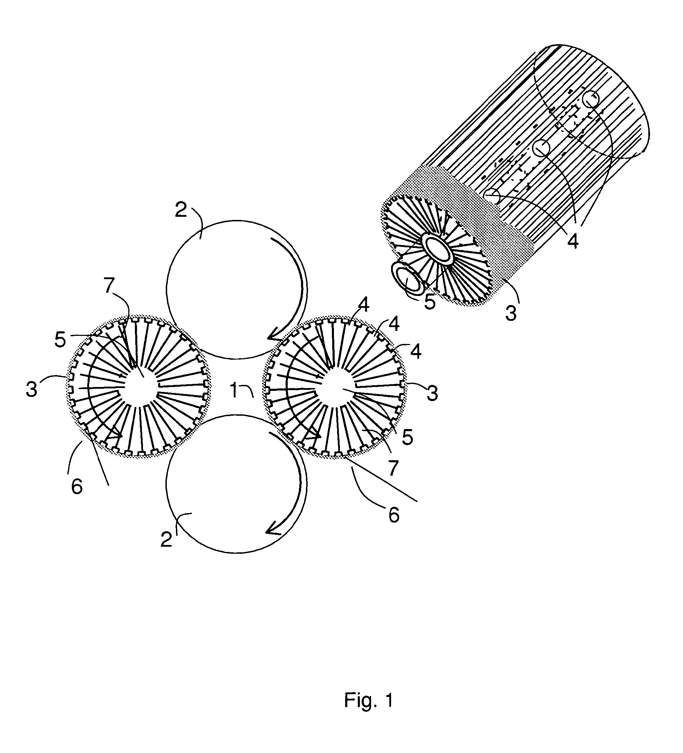

Figure 1: The pressure chamber 1 is formed by rollers 2 and 7 pressed together. The pressure chamber is closed in the ends by a sidewall. Between the rollers and the sidewall there is a sealing. 7 is a roller with grooves, which are in connection with the outlet 5 through holes 4. The holes can be placed as to connect two adjacent grooves. 7 is covered with a filter 3. Feed is led into the pressure chamber 1. By way of overpressure it is filtrated through the filter 3 and out through the outlet 4-5. The retained filter cake on the filter is pressed between the rollers 2 and 7, and then removed by the scraper 6.
Figure 2: The pressure chamber 1 is formed as in figure 1. 7 is a roller with a porous surface and a fine filter 3 at the inside, towards the outlet 5. Feed is led into the pressure chamber 1. By way of overpressure it is filtrated through the porous structure and the fine filter 3 to the outlet 5. The filter cake caught at the surface is pressed between the roller 2 and 7 before being removed by the scraper 6.
Figure 3: The pressure chamber is formed as in figure 1. 7 is a roller made from a porous material with a fine filter at the surface. Feed is led into the pressure chamber 1. By way of overpressure it is filtrated through the fine filter and the porous structure to the outlet 5. The filter cake is pressed and removed as in figure 1.
Figure 4: The pressure chambers 1, 8, 9, and 10 are formed by the rollers 2 and 7 as in figure 1. The sealing 13 towards the sidewall is constructed to be used for outlet, and is supplied with one or several holes in order to differentiate along the circumference of the roller 7. 13 can follow the roller 7 or be stationary. The holes in 13 are matched by holes in the sidewall. The roller 7 can be as described in figures 1,2, and 3. 14 can be a chamber in the roller or a permeable structure as described in figure 2.
Figure 5: The pressure chambers 1 and 8 are formed as in figure 1. Roller 7 can be as in figures 1-4. Besides the feed into pressure chamber 1, inlet or outlet can also happen in chamber 8. It is also possible to form a filter cake on roller 7 in chamber 1, which is then rinsed in chamber 8. The filter cake is pressed and removed as in figure 1.
Figure 6: As described in figure 5 but with three pressure chambers 1, 8, and 9. Inlet and outlet can happen in all the chambers 1, 8, and 9. The filter cake is pressed and removed as in figure 1.

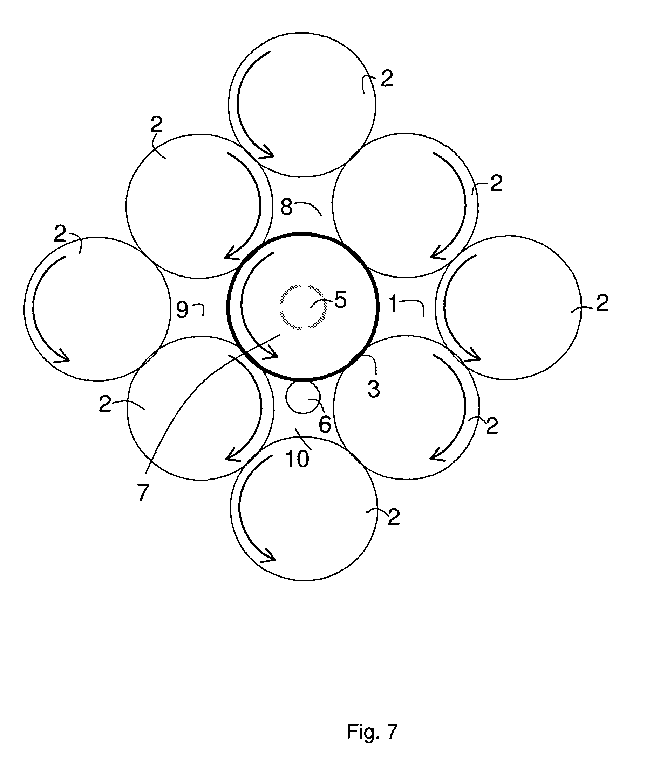

Figure 7: As described in figure 5, but with four pressure chambers 1, 8, 9, and 10. Inlet and outlet can happen in all the chambers 1, 8, 9, and 10. The filter cake is scraped or flushed out.
Figure 8: As described in figure 7, but with a filter band 11 going in and out of the system between the rollers 2 and 7. The scraper 6 removes the filter cake from the filter. Inlet and outlet is also possible in chamber 9 as described in figure 7.
Figure 9: As described in figure 7, but with a filter band 11 going in and out of the system between the rollers 2-7 and 2. The filter cake is removed by the scraper 6.
Figure 10: The pressure chamber 1 is formed as described in figure 1, but with more rollers 7 as described in figures 1-4. The filter cake is pressed and removed by the scraper 6.

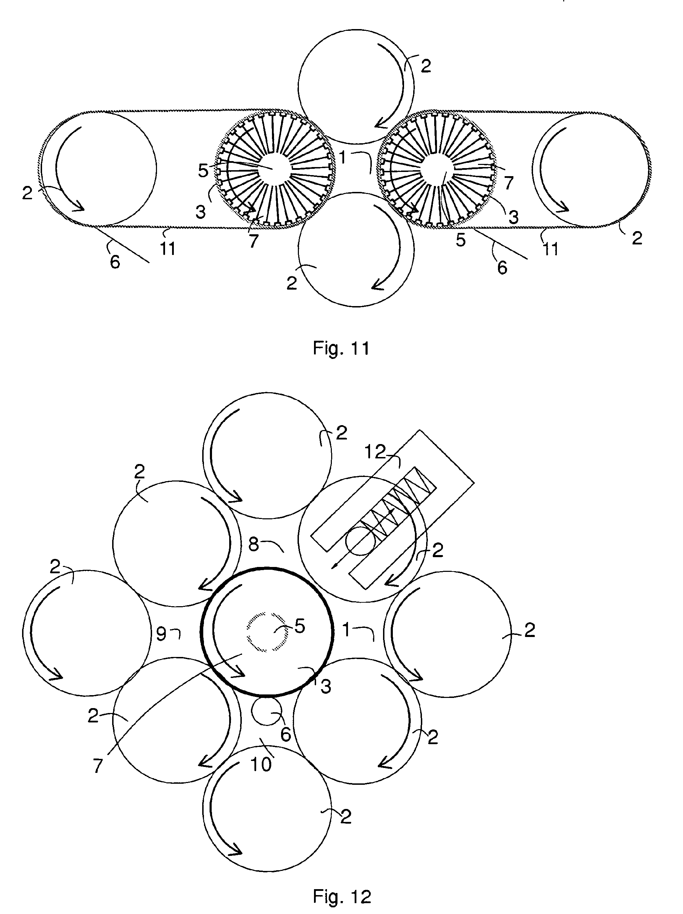

Figure 11: As described in figure 10 but with the filters 11 going over rollers 7 and 2. The filtrate is let out as described in figure 4. The roller 7 can be as described in figure 1-4. The filter cake is pressed and removed as in figure 1.
Figure 12: As described in figure 7, except the rollers can be moved during filtration by a device 12.

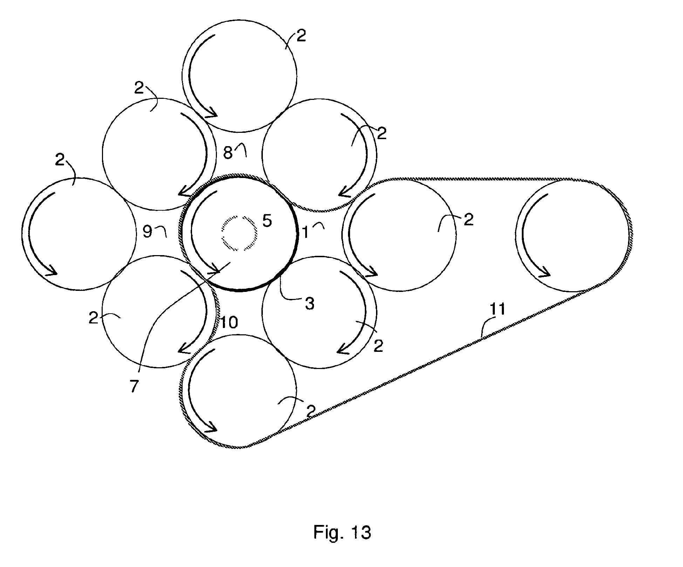

Figure 13: As described in figure 8, but with the filter 11 leaving through chamber 10 instead of chamber 1. Thereby filter cake caught in chamber 1 is led into the chambers 8 and 9, where it can be rinsed. It is also possible to build up a filter cake to form a secondary filter. A device to adjust the thickness of the cake is then required in chamber 10.

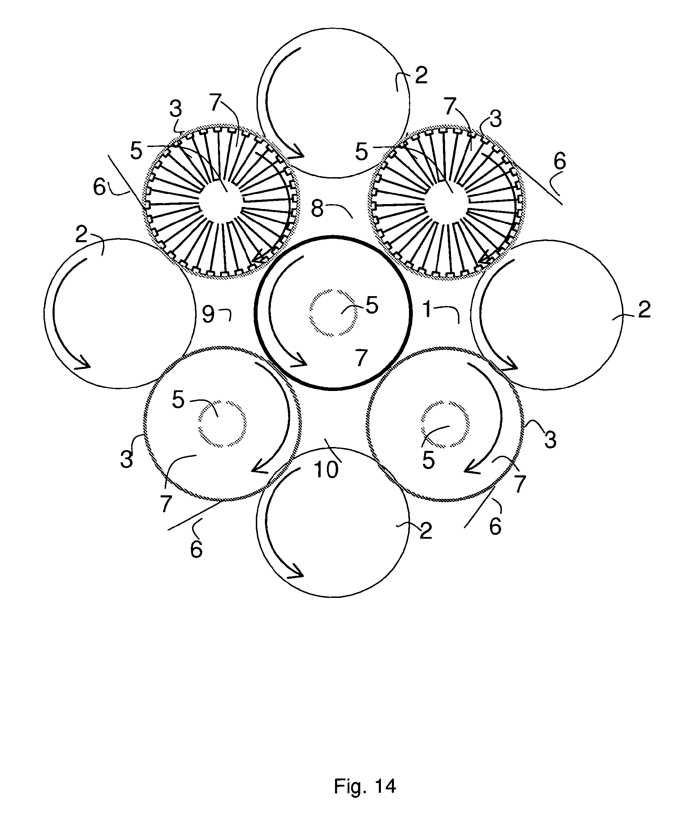

Figure 14: As described in figure 13, but without the filter band. Here every other roller 2 is swapped by a roller 7 as described in figures 1-4. The scraper 6 as described in figure 12, is adjusting the thickness of the filter cake.

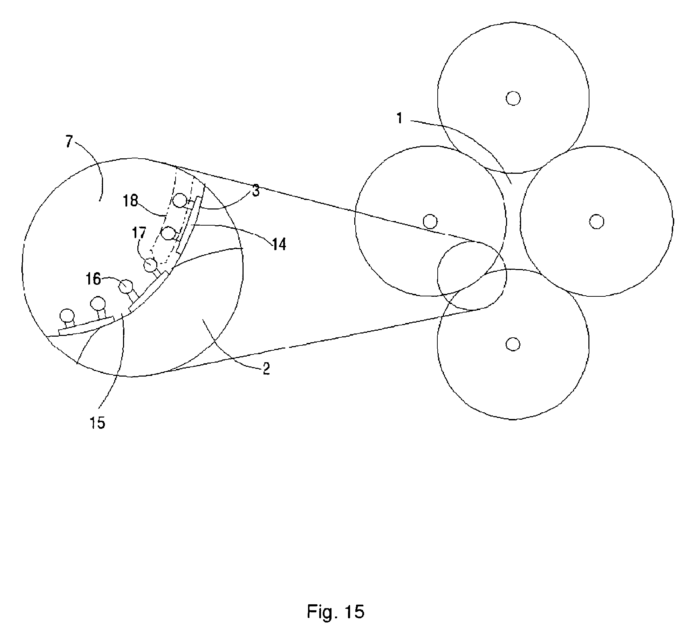

Figure 15: The liquid is led into chamber 1 and filtrated through filter 3 into a pattern of grooves 14 at the surface of roller 7. The circumference of the roller 7 is divided into sections with grooves 14 and sections without 15. The length of the grooves 14 is shorter than the length of the overlap between the roller 7 and the neighbouring pressing roller 2. The grooves 14 are connected to two channels 16 and 17, that leads the filtrate away through a slit 18 in the sidewall. During the pressing of the filter cake, the grooves 14 will be completely enclosed by the pressing roller 2 and grooveless interval 15. At this time it is flushed with air through channel 16 towards channel 17 to remove all liquid from the groove 14. Thereby it is avoided that the filter cake is rewetted by the filtrate in groove 14, when leaving the pressing zone.

### Detailed description of the invention

### Definitions:

For the sake of clarity of the present text the term "separation" is used synonymously with the term "filtering".

By the term "filter cake" is meant an accumulation of dry matter before liquid is removed according to the present invention.

By the term "filter belt" is meant a physical filter upon which a filter cake of a different material than the filter belt is obtained and being passed between two rollers. The term "filter belt" is used interchangeably with the term "filter".

By the term "pore roller" is meant a roller comprising pores extending from the surface of said roller to at least one channel extending axially through said roller, wherein the channel may provide means for guiding the filtrate to the filtrate outlet.

In the present context the term "substantially dry filter cake" covers an accumulation of dry matter after liquid has been removed.

By "particles and/or objects" are meant anything that the filter described by the invention will retain.

The following is a mutual description of both the method and the apparatus of the invention.

### Filtration of dry matter from a medium

It is within the scope of the invention to provide a separation method and apparatus used in the filtration of dry matter from medium.

Thus, in one aspect the invention relates to a method for separating dry matter from a medium, comprising the steps of
- providing a separation chamber at least partly defined by a plurality of rollers, wherein said chamber is capable of being pressure regulated, and wherein at least one of said rollers is a pore roller having a surface with pores allowing permeability for the medium, and furthermore having at least one channel for guiding the filtrate to the filtrate outlet, said channel being in fluid contact with the pores of the surface,
- arranging at least one filter belt so that it passes between at least one set of rollers consisting of a pore roller and one other roller,
- establishing a pressure difference across the at least one filter means,
- contacting at least one filter belt with a suspension of dry matter and medium accumulating dry matter on the at least one filter belt,
- obtaining a filter cake on said filter belt, and
- passing the at least one filter belt and filter cake through said at least one set of rollers, whereby medium is separated from the filter cake,
- optionally removing filter cake from the at least one filter belt.

Due to the pores of at least one roller in the system it is possible to obtain a more effective filtration than with previous systems.

### Rollers

A plurality of rollers define a separation chamber according to the invention. At least some of the rollers are arranged in a manner so that a filter belt passes between a set of rollers whereby the filter cake on said filter belt is compressed by a pressure exerted by said rollers towards each other.

The system comprises at least one pore roller, in particular at least one of the rollers constituting the set of rollers between which the filter belt passes is a pore roller.

Due to the pore roller arranged in the system it is possible to use the pores to transport medium either to the filter or from the filter during the filtering process. Thus, in one embodiment the suspension to be filtered is arranged in the separation chamber and the medium is transported into the pores of the pore roller during separation. In another embodiment, the suspension to be filtered is arranged in the pore roller or flown through the pore roller, and the medium is transported into the separation chamber during separation. In another embodiment related to any of the above-mentioned methods, there is provided an additional step, wherein at least one filter is re-contacted with the suspension.

The method and the system include at least two rollers, such as at least three rollers, such as at least four rollers, such as at least five rollers, such as at least six rollers.

Furthermore, the method and the system may comprise more than one set of rollers, wherein one roller is a pore roller. Accordingly the method and the system may comprise at least two sets of rollers, such as at least three sets of rollers, such as at least four sets of rollers.

The roller may be made of any material suitable for the purpose. Preferably, the rollers are made of a material that is water insoluble and sufficiently rigid to withstand the pressure applied from the neighbouring rollers without suffering any major damages.

### Pore roller

The at least one pore roller is a roller comprising pores extending from the surface of the roller to at least one channel extending in said roller, preferably extending axially in said roller. The size of the pores is preferably adjusted to a particle size of the dry matter to be separated as well as to the filter belt used in the process.

Thus, in one embodiment the pore roller has a pore size of at the most 5 mm, in particular at the most 4 mm, in particular at the most 3 mm, in particular at the most 2 mm, in particular at the most between 1 mm, in particular at the most 75 µm, in particular at the most 50 µm, in particular at the most 25 µm, in particular at the most 10 µm, in particular at the most 1 µm, in particular at the most 0.5 µm, in particular at the most 0.1 µm, in particular at the most 0.05 µm, in particular at the most 0.01 µm.

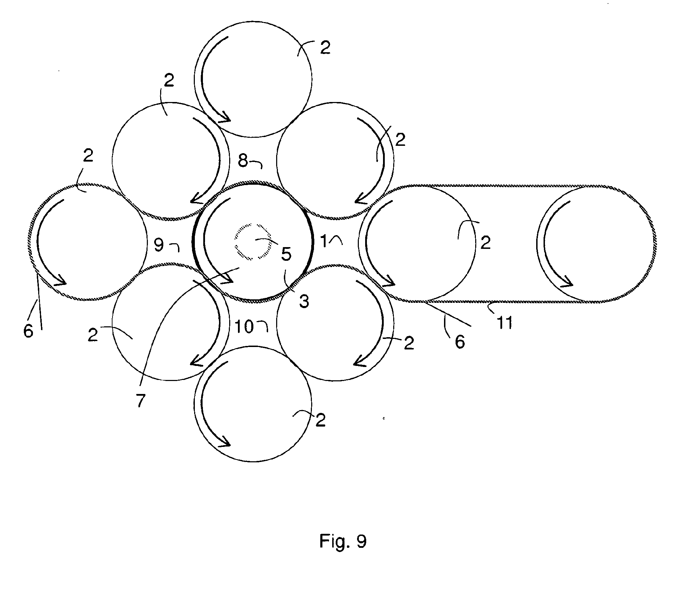

The size of the pores may be substantially identical along the pore, or the pore may extend into a wider groove when the pore reaches the outer surface of the roller or the inner surface of the roller in the channel, see for example figures 1 and 9.

The pore roller is made from any suitable material, such as metal, rubber, plastic, including nylon, ceramics, and glass. In a preferred embodiment the pore roller is made from a ceramic material or a glass material or a combination thereof.

In another embodiment the outer part of the pore roller, such as the part comprising the pores, is made from one material, such as metal, rubber, plastic, including nylon, ceramics, and glass, and the inner part of the pore roller is made from another material, such material may also be selected from metal, rubber, plastic, including nylon, ceramics, and glass.

The pore roller may be connected to means for pressurizing the system, for example so that pressure or vacuum is applied to the channel(s) of the pore roller in order to pressurize the filtering system. In one embodiment, the pressure difference across the filter belt is established by applying vacuum or an overpressure to the channel in the pore roller. In a related embodiment, there is provided means for applying vacuum or an overpressure to the channel in the pore roller.

### Other roller

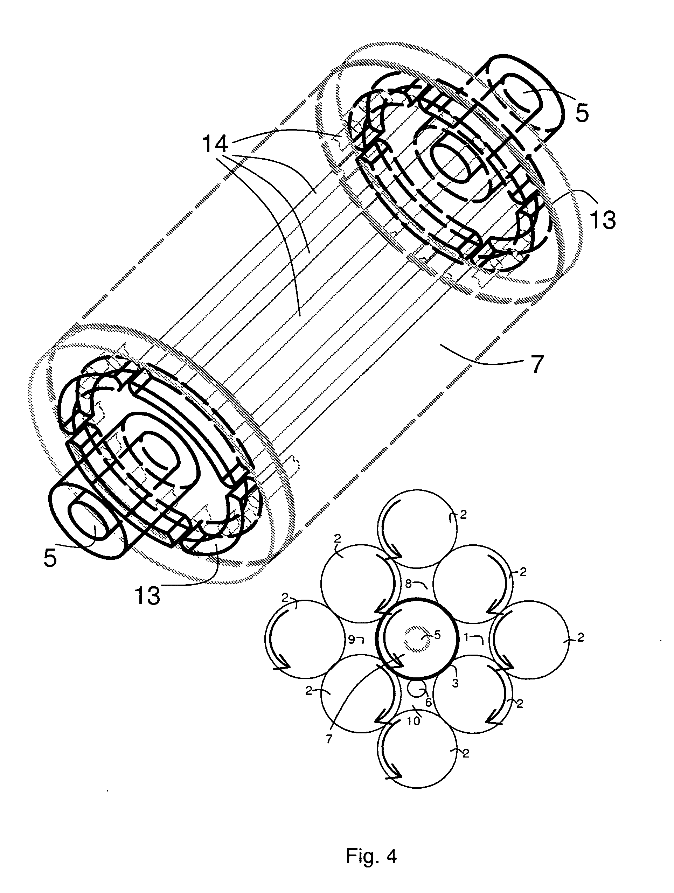

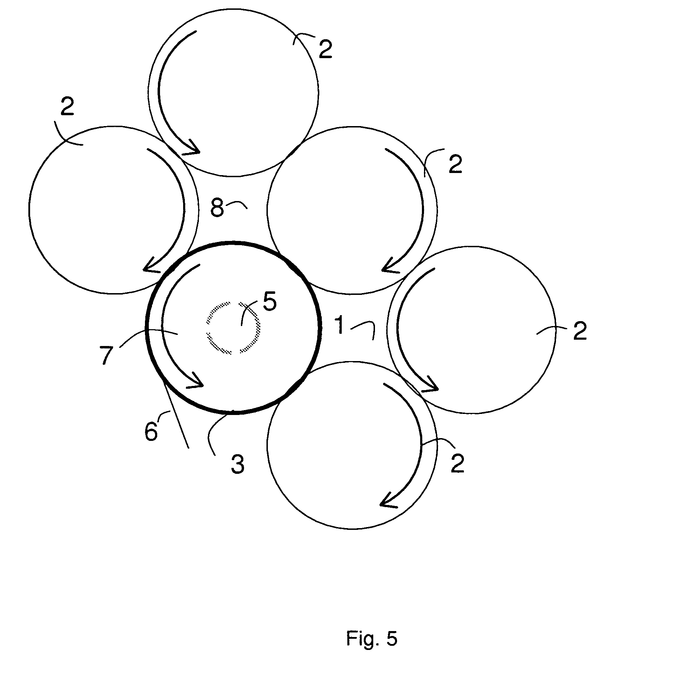

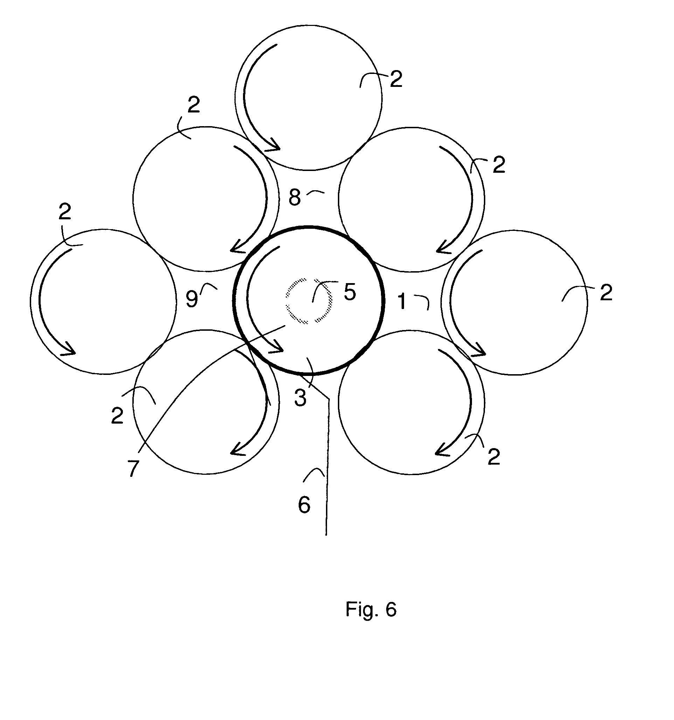

The other roller(s) of the system may be any suitable rollers, including a pore roller as described above. In many embodiments the other roller(s) is(are) a roller without any pores. Other rollers in the system further comprise rollers having the purpose of defining the separation chamber without being contacted by the filter belt, see for example figures 4, 5 and 6.

The at least one set of rollers of the invention may be made from identical material or it may be made from different material. The individual rollers may be made of one material or a variety of materials.

The following description of roller material covers both rollers contacting the filter band as well as any other rollers in the system.

In one embodiment the at least one roller from the at least one set of rollers is made from a material selected from the group consisting of metal, steel, stainless steel, rubber, plastic including nylon, glass, and ceramics, or combinations thereof, such as partially made from rubber. By "partially" is meant that the at least one roller from the at least one set of rollers may be made from various material, for example in one embodiment having a core of metal, such as steel and an outer layer of rubber.

In another embodiment at least one roller from the at least one set of rollers is having a core made from hard rubber and an outer layer made from rubber being softer than the core rubber. The shore value of the rubber may be between 20 and 95, such as between 60 and 90.

Further, in another embodiment at least one roller from the at least one set of rollers is made from nylon.

In yet another embodiment at least one roller from the at least one set of rollers is made from plastic.

In an even further embodiment at least one roller from the at least one set of roller is made from felt.

In a preferred embodiment the individual rollers from the at least one set of rollers are made from stainless steel and rubber.

In another preferred embodiment the at least one guide roller is made from rubber.

Further, it is within the scope of the invention to provide at least one set of rollers wherein one roller is inflatable. Inflatable rollers may in one embodiment enforce the tightness with which the rollers embrace the at least one filter. In a further embodiment only a part of the roller is inflatable, such as the end portion of the individual roller.

The embodiment, wherein the at least one set of rollers has grooves is also within the scope of the invention. The grooves may be perforated making it possible for medium to pass through the perforations in the grooves. The grooves may aid the movement of the dry matter along the filter. Grooves may also aid to move medium from the suspension by aiding the movement of medium from the rollers.

### Temperature regulation

Any of the rollers in the system, including pore rollers, may be temperature regulated if appropriate with respect to the suspension to be filtered. Thus, in one embodiment at least one roller has a temperature of below 0 °C, such as below -2 °C, for example below -5 °C. In another embodiment the temperature is increased, for example to body temperature.

Further, the at least one roller from the at least one set of rollers may in one embodiment have a temperature of below 0 °C (zero degrees Celsius) as mentioned above and at least one other set of rollers may be made from rubber or another material as previously described.

According to the invention the at least one set of rollers is exerting a simultaneous force on the at least one filter, so that the filter belt is pressed or squeezed between to two rollers of the set of rollers thereby adding to the filtering effect of the system.

Furthermore, in one embodiment the at least two or more sets of rollers are used in the present method and in this way making it possible to exert pressure on the filter with varying degrees. The at least two sets of roller are in another embodiment placed transposed.

In the method according to the invention the at least one set of rollers is preferably capable of exerting a pressure of 5 kg/cm² on the at least one filter, such as at least 10 kg/cm² on the at least one filter, for example at least 15 kg/cm² on the at least one filter, such as at least 20 kg/cm² on the at least one filter, for example at least 25 kg/cm² on the at least one filter, such as at least 30 kg/cm² on the at least one filter, for example at least 35 kg/cm² on the at least one filter, such as at least 40 kg/cm² on the at least one filter, for example at least 45 kg/cm² on the at least one filter, such as at least 50 kg/cm² on the at least one filter.

### Separation chamber

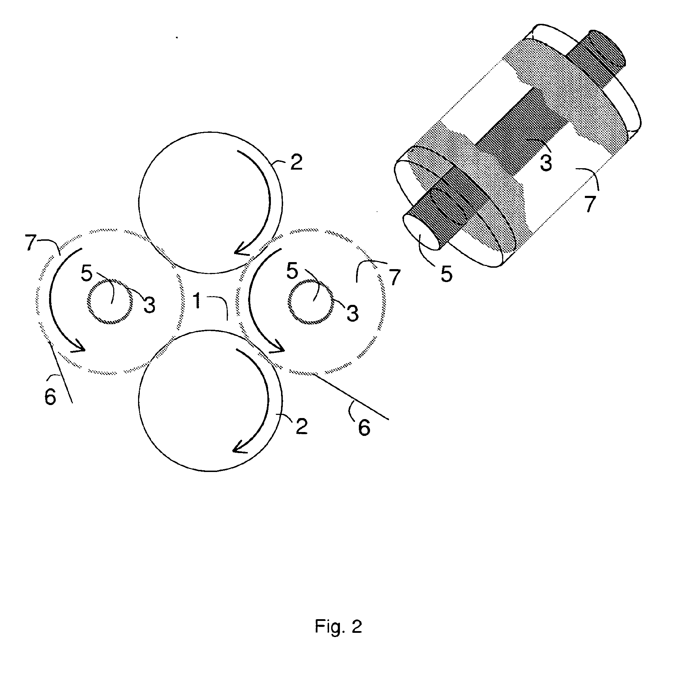

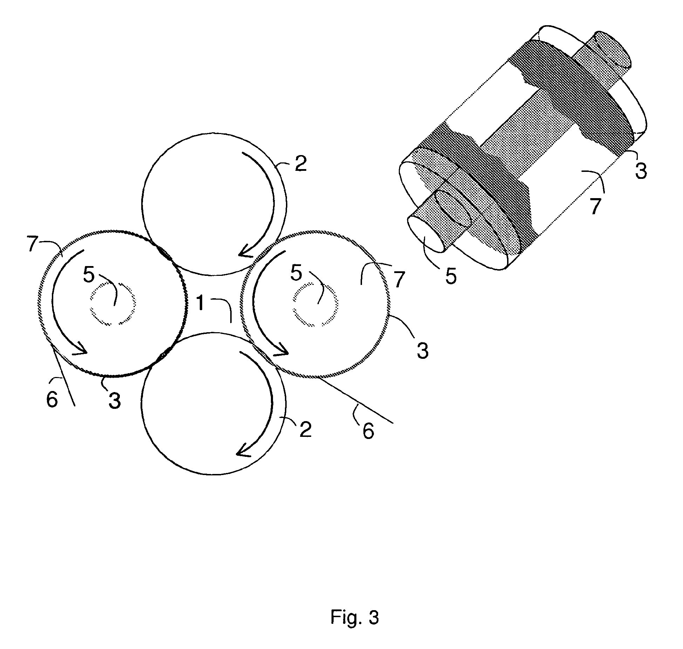

The system according to the invention comprises at least one separation chamber at least partly defined by a plurality of rollers. As may be seen in the Figures it is preferred that at least four rollers are defining a separation chamber, in particular if two pore rollers are arranged, such as shown in Figures 2 and 3. However, the system may comprise more rollers, such as six or eight rollers defining one or more separations chambers.

The separation chamber either comprises the suspension to be filtered or the resulting filtered medium. Suspension may be provided to the separation chamber continuously or in batches as is relevant for the particular application.

In one embodiment the system may comprise at least two separation chambers, such as at least three separartion chambers, for example at least four chambers, such as at least five chambers, for example at least six chambers, such as at least seven chambers, such as at the least eight chambers.

Each chamber may according to the invention have a particular purpose. One chamber may have the function of being a receptive for suspension to be filtered. Another chamber may have the function of being receptive for a liquid or suspension to be used for washing the at least one filter. Such liquid or suspension may be neutral, such as water.

### Filter means

According to the invention the at least one filter means, e.g. a filter belt, is brought in contact with the suspension. Upon the at least one filter's contact with the suspension the at least one filter may, in one embodiment, be moved through the suspension. This movement may be performed mechanically or it may be performed manually.

The filter means may be a filter belt covering a part of the pore roller or the whole circumference of the pore roller. Alternatively the filter means may be a filter attached to the pore roller or integrated with the surface of the pore roller, such as the filter means shown in Figure 15.

In one embodiment it is envisioned that the at least one filter covers the pore roller so that the filter is brought into contact with the separation chamber due to the rotational movement of the pore roller.

The present method comprises at least one filter, such as at least two filters, for example at least three filters, such as at least four filters, for example at least five filters. The number of filters used for the purposes of the present invention is dependent on factors, such as the nature of the suspension, the volume of the suspension to be filtered. In one embodiment a first coarse pore filter may be used during a pre-filtering process followed by the use of a second fine pore filter for clarification filtering. By "nature of the suspension" is meant the physical and/or chemical properties, such as the toxic properties of the suspension; the type of material, and the dry matter content of the suspension.

The at least one filter of the invention may have a pore size according to for example the type of suspension to be filtered and the expectations of the level of dry matter content of the suspension after separation. Furthermore, the pore size of the filter may be adapted to the pore size of the pore roller.

When filtering from the separation chamber towards the channel of the pore roller the pores of the filter belt is mainly determined by the particles of the suspension. In one embodiment the pore size of the filter belt is smaller than the pore size of the pore roller, and in another embodiment the pore size of the filter belt is larger than the pore size of the pore roller. On the other hand, when filtering from the pore roller towards the separation chamber, it is preferred that the particles of the suspension are withheld by the filter belt only, and therefore it is preferred that the pores of the pore roller are larger than the pores of the filter belt.

In one embodiment of the invention the filter has a pore size of at the most 5 mm, in particular at the most 4 mm, in particular at the most 3 mm, in particular at the most 2 mm, in particular at the most between 1 mm, in particular at the most 75 µm, in particular at the most 50 µm, in particular at the most 25 µm, in particular at the most 10 µm, in particular at the most µm, in particular at the most 0.5 µm, in particular at the most 0.1 µm, in particular at the most 0.05 µm, in particular at the most 0.01 µm, in particular at the most 0.005 µm, in particular at the most 0.001 µm.

The permeability of the filter according to the invention may be chosen with regard to the nature of the suspension to be filtered/separated, and of the aimed level of dry matter present after the separation. However, in one aspect of the invention the filter has a permeability of water of at least 20.000 l/h/bar/m², in particular at least 30.000 l/h/bar/m², in particular at least 40.000 l/h/bar/m², in particular at least 50.000 l/h/bar/m², in particular at least 60.000 l/h/bar/m², in particular at least 70.000 l/h/bar/m², in particular at least 80.000 l/h/bar/m², in particular at least 90.000 l/h/bar/m², in particular at least 100.000 l/h/bar/m².

The present method comprises in one embodiment a filter belt, which is a band, for instance the filter belt may be endless and/or disposable. In this embodiment the filter is normally only used once and thereafter discharged, however it may be used in more than one separation chamber before discharge.

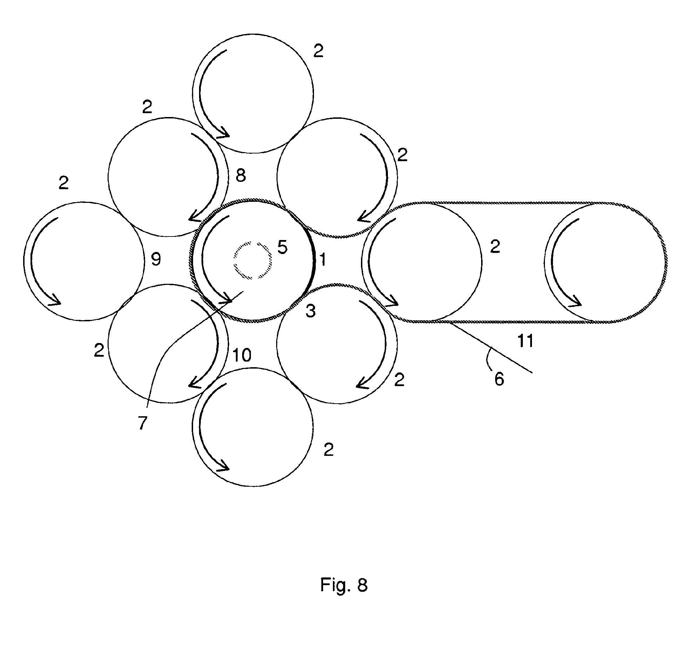

In another embodiment the filter belt is a circular filter belt, whereby the various filter parts are re-entered into a separation chamber more than once. One example is shown in Figure 8, wherein the filter belt covers a guide roll before entering the separation chamber again. Another embodiment is shown in Figures 2 and 3 wherein the filter belt covers at least a part of the surface of the pore roller, in particular a filter belt surrounding the surface of the pore roller.

In one embodiment the filter may be surrounded, by a frame on at least one side of the filter for the purpose of preventing the suspension from leaking into the apparatus from the filter and thereby providing a method having reduced leakage.

The filter of the invention may be suited to fit the nature of the suspension to be separated. This may be the case when the filter is coated. In one embodiment the coating comprises gel particles. In another embodiment the filter is charged, for example, by carrying magnetic particles on the surface, and in a related embodiment, the filter is magnetic. By coating the filter with selective molecules it is possible to select particular particles/substances from the suspension. For example the filter may be coated with a catalyst, such as an enzyme for converting the suspension to be filtered. In another embodiment the filter may be coated with receptors or antibodies capable of binding selectively to particles in the suspension. The coating may, for instance, comprise binding members for one or more dry matter particles in the suspension.

The filter of the invention may be provided with ion-exchange material, wherein the filter has a regeneration zone following the filtration zone. This embodiment may be used advantageously to separate water from nitrate, for example.

In one embodiment, the filter belt is grooved, and in another embodiment, the filter belt is passing over at least one guide roller.

In one embodiment of the invention the filter is defined by a layer of paint provided to the surface of the roller.

In another embodiment bacteria or fungi are present on the filter. The presence of bacteria or fungi may aid in fermenting processes. It is for instance envisioned that the present invention may be applied to the dairy industry, such as in the manufacture of products made from curdled milk.

Further, bacteria or mammal cells may be cultured in the at least one enclosed chamber of the present apparatus. This embodiment may be used in a laboratory setting. Suspension may be sprayed into the chamber whereby the relative air humidity in the chamber may be controlled.

The method of the present invention may comprise at least one filter made from various materials. The material from which the filter is made may be suited to the individual suspensions.

In one embodiment the at least one filter is made from Juncus, grass, or plant fibres. In a further embodiment the at least one filter is made from metal, rubber, or plastic.

In another embodiment the at least one filter is made from carbon fibre, or paper, or textile, or artificial textile.

According to the invention the filter may comprise at least one cavity. By the term "cavity" is meant a physical space within the filter material, wherein for example suspension may be found. The cavity structure of the filter may be compared to the structure of a sponge. The at least one cavity of the at least one filter may in one embodiment hold particles/compounds for binding to particular particles/compounds in the suspension to be separated.

In a further embodiment the at least one filter is made from a flexible material. By "flexible material" is meant a material capable of vertical and horizontal movement when exposed to physical pressure. Such material may for example be rubber or plastic.

In another embodiment the at least one filter comprises at least one cavity and is made from a flexible material. The flexible material may aid in the liquid being pressed from the filter cake when the filter cake on the filter is passed through at least one set of rollers.

The filter may comprise a support band in a further embodiment. The support band has the advantage of re-enforcing the filter band, for example in situations where the dry matter content of the suspension is high and/or in situations where the weight of the dry matter is heavy. Further, the filter may be fragile and therefore in need of a support band, or there may be a drop of pressure across the filter, which makes the filter fragile and therefore in need of a support band.

In one embodiment of the invention the at least one filter is sterile. Such sterile filter may be used in the separation of sterile suspensions, for example pharmaceutical compositions where sterility is vital for the successful quality of the invention or when filtering air, for example to operation theatres or for sterile laboratory work.

For the purpose of the present method the at least one filter is capable of filtering at least 500 l/m²/t, such as at least 550 l/m²/t, for example at least 600 l/m²/t, such as at least 650 l/m²/t, for example at least 700 l/m²/t, such as at least 750 l/m²/t, for example at least 800 l/m²/t. The filtering capacity is an estimate covering the capacity before the actual filtering process has commenced.

The filter belt is preferably either continuously moving or stepwise moving. Thus, in another embodiment the velocity of the filter movement may be in steps, comprising one step of a stand still, i.e. 0 km/h and at least one other step of movement, i.e. a velocity of more than 0 km/h. The duration of the individual steps depends on parameters, such as the physical properties of the filter and the nature of the suspension to be filtered.

In another embodiment of the invention the at least one filter is moving at a velocity of between 0.2 -100 km/h, in particular between 0.4-70 km/h, in particular between 0.6-50 km/h, in particular between 0.8-20 km/h, in particular between 1-10 km/h, in particular between 1.5-5 km/h. However, in a preferred embodiment the velocity of the movement of the filter is between 1 and 10 km/h. In yet another preferred embodiment the velocity of the movement of the filter is between 1.5 and 5 km/h.

In a further embodiment the velocity of the movement of the filter is pressure controlled.

In yet a further embodiment the velocity of the movement of the filter is controlled by the flow rate of the suspension.

### Pressure difference

The separation of dry matter from liquid is according to the invention performed in the separation chamber capable of being pressure regulated. By the term "pressure regulated" is meant that means for regulating/controlling the pressure in the enclosed separation chamber are provided for.

The pressure may be regulated/controlled such that there is either vacuum or overpressure in the separation chamber. By "vacuum" is meant a pressure determined in bar, which is lower than the atmospheric pressure. By "overpressure" is meant a pressure, which is higher than the atmospheric pressure. In the present invention the atmospheric pressure is defined as 0 (zero) bar.

In one embodiment the pressure exerted on the separation chamber is from -1 to - 0.05 bar relative to the atmospheric pressure.

In another embodiment the pressure exerted on the separation chamber is from 0.05 to 10 bar relative to the atmospheric pressure.

In a further embodiment the pressure exerted on the separation chamber is from 1.0 to 6 bar relative to the atmospheric pressure.

In yet a further embodiment the pressure exerted on the separation chamber is from 1.5 to 4 bar relative to the atmospheric pressure.

### Suspension

For the purposes of the present invention it is now made possible to provide a suspension to a separation/filtering method in a continuous manner, such as a suspension being provided as a continuous stream. By this is meant that the suspension may be fed to the filtering apparatus, also within the scope of the invention, continuously throughout the filtering process. The volume of suspension fed and the velocity with which the suspension is fed to the filtering apparatus are dependent on factors, such as the physical nature of the suspension, the amount of suspension desired to be filtered, and the size and types of the at least one filter.

In another aspect of the invention the suspension is provided as a non-continuous stream. This may for example be the case when a suspension is stationary placed in the separation chamber container wherein the at least one filter is brought in contact with the suspension.

By using the present method of filtering it is possible to separate dry matter from medium at a highly efficient rate. In one embodiment of the invention the suspension has a dry matter content prior to the separation of at least 5%. However, in another embodiment of the invention the dry matter content of the suspension prior to separation is at least 10%. In yet another embodiment the dry matter content of the suspension prior to separation is at least 15%, for example at least 20%, such as at least 25%, for example at least 30%, such as at least 35%, for example 40%, such as at least 45%, for example at least 50%.

The present invention is capable of filtering suspensions having a relatively high dry matter content. Such suspensions may be for example juice comprising fruit pulp or sludge.

It is the purpose of the present invention to provide a method wherein the suspension after separation has a dry matter content of at the most 50%, such as at the most 45%, for example at the most 40%, such as at the most 35%, for example at the most 30%, such as at the most 25%, for example at the most 20%, such as at the most 35%, for example at the most 30%, such as at the most 25, for example at the most 20%, such as at the most 15%, for example at the most 10%, such as at the most 5%, for example at the most 2%.

### Removal of substantially dry filter cake

Once the dry matter has been collected on the at least one filter it may according to the invention be removed. The dry matter collected on the at least one filter is denoted "substantially dry filter cake". The removal of the substantially dry filter cake may take place simultaneously with the continuation of the separation process, i.e. the fact that the substantially dry filter cake is being removed does not influence the continuity of the separation process.

Accordingly, in one embodiment of the invention the filter cake, such as substantially dry filter cake, is removed from the at least one filter, such as a filter belt, by the means of compressed air.

In a second embodiment the filter cake, such as substantially dry filter cake, is removed from the at least one filter by the means of vibration.

In a further embodiment the filter cake, such as substantially dry filter cake, is removed from the at least one filter by the means of scraping. The scraper may be selected among a vast variety of materials and the scraper may also be a filter itself.

### Cleaning of filter

It is a purpose of the invention to provide a method wherein the at least one filter may be recycled to the separation chamber. This requires the cleaning of the at least one filter. The durability of the at least one filter may depend upon the type of filter, the nature of the suspension and time of use of said filter.

The cleaning of the filter according to the invention may in one embodiment be performed by enzymes, which are capable of engulfing dry matter material residues on the at least one filter.

In another embodiment the at least one filter is cleaned by the means of highpressure washing.

Further, in yet another embodiment the at least one filter is cleaned by chemicals, such as a detergent.

For reasons of clarification the above mentioned description of the present method is also valid for the apparatus of the present invention.

### Applications of the method and system

The present invention relates to a method and a system for separating dry matter from a medium. The present invention may be used in relation to any dry matter and medium, wherein the medium is normally either a gaseous medium, such as gas or air, or a liquid. The invention may be used in a variety of purposes and a variety of industries.

Also, the present invention may be used in connection with separation processes wherein a process for converting either the dry matter or the medium or both is included. This may be relevant if for example a catalyst is included in the filter.

Furthermore, in the present invention a filter belt carrying compounds having affinity for one or more types of dry matter in the suspension, so that said dry matter is "caught" by the compounds optionally for further processing or use after separation from the medium.

As may be understood from the examples mentioned below the method and the system according to the invention may be used for separating dry matter from a medium, wherein either the dry matter or the medium or both may be used after the separation.

For example the present invention may be used in the industry of producing food, feed and beverages. Examples are:

One example of such an application is in the manufacture of juice, wherein it is desired to separate fruit or vegetable etc. components from the fruit or vegetable etc. liquid. Further, filter aid may be removed from liquid juice.

In a preferred embodiment fruit or vegetable etc. components are separated from the fruit or vegetable liquid without the aid of enzymes or heating. This provides for a more natural product because more nutrients are preserved by using the present invention when compared to conventional separation techniques using for example enzymes or/and heating. This cautionary treatment may be used in the manufacture of a variety of food products. Further, filter aid may be removed from liquid juice.

For certain application areas, such a juice making the invention may additionally be used in private homes. Here the present invention may be applied to any food suspension where it is desirable to separate dry matter from liquid.

Another example of the application of the present invention is in the brewery industry. Here, in one embodiment malt may be removed from mask to obtain wort. In another embodiment trub may be removed from wort to obtain trub-free wort. In yet another embodiment yeast cells are removed from ready-made beer obtaining yeast-free beer. In a further embodiment haze is removed from yeast-free beer obtaining ready to drink beer.

A further example of the application of the present invention is in the winemaking industry. Here, in one embodiment pulp may be removed from crushed grapes. In another embodiment yeast cells are removed from ready-made wine obtaining yeast-free wine. In a further embodiment haze is removed from yeast-free wine obtaining ready to drink wine.

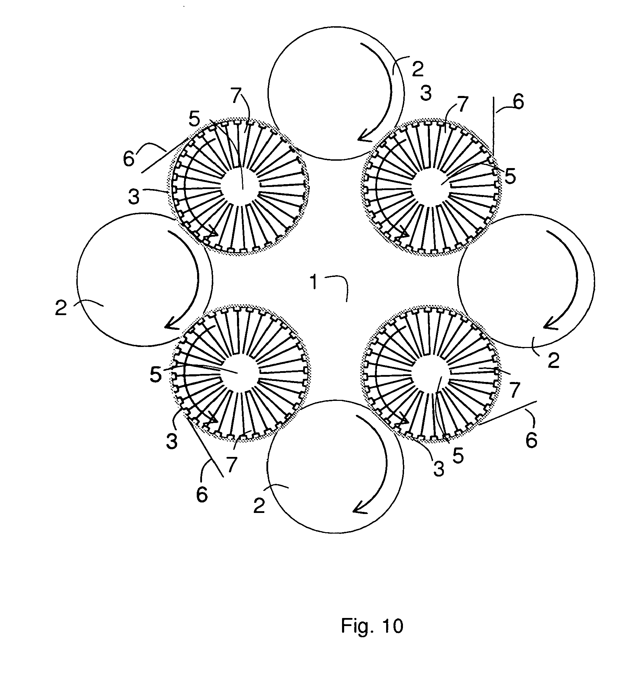

The present invention may replace conventional winemaking techniques by not using enzymes in the winemaking process. However, in a further embodiment the filter cake obtained from the filtering process may be dehydrated and enzymes added. This is performed to extract colour and remaining juice. (see the illustration in figure 10).

The present separation method/apparatus may be applied to the separation of bacteria or fat from raw milk. Further, spores may be removed from milk used for cheese-making. In another embodiment water, protein, or lactose is removed from whey.

Further, according to the invention it is envisioned that the present method and apparatus may be used in the eatable oil industry. For example by separating liquid, i.e. oil from the source of said oil, the source being for example components of olives, various seeds, and other sources of eatable oils. In a preferred embodiment a grass filter type is used for this application. In a further embodiment of the invention bleach soil is removed from crude eatable oil. The present invention may replace the conventional screw presser.

The use of the substantially dry filter cake is also within the scope of the present invention. In one embodiment the substantially dry filter cake may be used for animal feed. In another embodiment the substantially dry filter cake may be used as insulating material, for example in building constructions. In another embodiment the textile industry may use the substantially dry filter cake as insulation material in, such as outdoor equipment articles, for example sleeping bags.

In another aspect of the invention the use of the method and apparatus may be for sludge treatment, for example by eliminating unwanted particles before it re-enters the surrounding environment. Further, It is within the scope of the invention to recycle waste-water by applying the present invention. Such re-cycling may be applied to commercial car washing.

In yet a further aspect the use of the present method and apparatus is applied to the paper and pulp industry.

In an environmental aspect of the invention the use of the present invention is for processing manure. This is an important process associated with modern agricultural industries. The manure may be subjected to the present separation process to eliminate water before re-cycling the manure, for example in a bio-gas plant.

Further, the present invention may be used to remove water, dry matter, and germs from fermenting liquids, and as a pre-treatment prerequisite to sterilise a substrate used in the fermenting process.

The present invention may in a further embodiment be used in the pharmaceutical industry. For example by applying the separation method in the purification of pharmaceutical compositions.

Further, the invention may in another embodiment be used in the cosmetics industry for the removal of impurities from cosmetic products, such as soap, make-up and moisturizers.

It is further envisioned that the present invention may be used in an automatic coffee machine. By applying the present invention the coffee made will maintain the same strength throughout the brewing process.

Another application of the present method and apparatus is for use in floor cleaning machines. It is envisioned that water used in industrial floor cleaning machines may be recycled because the filtering process is performed at the same time as the floor is being cleaned.

The present invention may further be used to remove nitrate, bacteria and/or ochre from drinking water.

The present invention may be used to separate impurities from paint; biological material, such as plant material from gutter outflow; impurities from gasoline; impurities from blood and dry matter from water from a kitchen sink outlet.

When the filter belt is coated with compounds having affinity for one or more dry matter types in the suspension, the method and the system according to the invention may be used for separating antibodies, proteins, nucleotides, and the like for use in medical and biotechnical fields.

Furthermore, the present invention may be used for separating dry matter from air or a gas. Examples are:

Separation of particles from gas, such as flue gas from vehicle exhaustion as well as from other combustion engines. In particular when using a filter being coated with a catalyst capable of catalyzing NOX and soot particles. Such a filter may further carry reactants useful in the reaction, such as ammonia. In particular for use in relation to vehicles, such as vans and lorries it is advantageous to design the size of the system to fit with the size of the conventional exhaust parts of the vehicles.

Another example is cleansing of air, for example cleansing of air for sterile use, such as air for an operation theatre.

## Claims

1. A method for separating dry matter from a medium, comprising the steps of
- providing a separation chamber defined, in cross section, by a plurality of rollers, wherein said chamber is capable of being pressure regulated, and wherein at least one of said rollers is a pore roller having a surface with pores allowing permeability for the medium and furthermore having at least one channel for guiding the filtrate to the filtrate outlet, said channel being in fluid contact with the pores of the surface,
- arranging at least one filter means so that a filter cake passes between at least one set of rollers, said one set of rollers consisting of a pore roller and one other roller,
- establishing a pressure difference across the at least one filter means,
- contacting the at least one filter means with a suspension of dry matter and medium accumulating dry matter on the at least one filter means,
- obtaining a filter cake on said filter means, and
- passing the at least one filter means and filter cake through said at least one set of rollers, whereby medium is separated from the filter cake,
- optionally removing filter cake.

2. The method according to claim 1, wherein the filter means is integrated with the surface of the pore roller.

3. The method according to claim 1, wherein the filter means is a filter belt.

4. The method according to claim 1, wherein the filter means is a filter attached to the pore roller.

5. The method according to claim 1, wherein the suspension is arranged in the separation chamber and the medium is transported into the pores of the pore roller during separation.

6. The method according to claim 1, wherein the suspension is arranged in the pore roller, and the medium is transported into the separation chamber during separation.

7. The method according to any of the preceding claims, comprising an additional step, wherein the at least one filter is re-contacted with the suspension.

8. The method according to any of the preceding claims, wherein a filter belt covers at least a part of the surface of the pore roller, in particular a filter belt surrounding the surface of the pore roller.

9. The method according to any of the preceding claims, wherein the at least one filter is moving at a velocity of between 0.2 -100 km/h, in particular between 0.4-70 km/h, in particular between 0.6-50 km/h, in particular between 0.8-20 km/h, in particular between 1-10 km/h, in particular between 1.5-5 km/h.

10. An apparatus for the separation of dry matter from a medium, comprising
- a separation chamber defined, in cross section, by a plurality of rollers, wherein said chamber is capable of being pressure regulated, and wherein at least one of said rollers is a pore roller having a surface with pores allowing permeability for the medium, and furthermore having at least one channel for guiding the filtrate to the filtrate outlet, said channel being in fluid contact with the pores of the surface,
- at least one filter means arranged so that it passes between at least one set of rollers consisting of a pore roller and one other roller,
- means for establishing a pressure difference across the at least one filter means,
- means for contacting at least one filter means with a suspension of dry matter and medium, and
- means for passing the at least one filter means and filter cake through said at least one set of rollers,
- optionally means for removing filter cake.

11. The apparatus according to claim 10, wherein the filter means is a filter belt.

12. The apparatus according to claim 11, wherein a filter belt covers at least a part of the surface of the pore roller, in particular a filter belt surrounding the surface of the pore roller.

13. The apparatus according to any of the claims 10-12, wherein the filter has a permeability of water of at least 20.000 l/h/bar/m², in particular at least 30.000 l/h/bar/m², in particular at least 40.000 l/h/bar/m², in particular at least 50.000 l/h/bar/m², in particular at least 60.000 l/h/bar/m², in particular at least 70.000 l/h/bar/m², in particular at least 80.000 l/h/bar/m², in particular at least 90.000 l/h/bar/m², in particular at least 100.000 l/h/bar/m².

14. The apparatus according to any of the claim 11-13, wherein the filter belt comprises a catalyst.

15. Use of the method as defined in the claims 1-9 and/or the apparatus as defined in the claims 10-14 for separating dry matter from a medium.

## Patentansprüche

1. Verfahren zum Abtrennen von Trockengut aus einem Medium, welches die Schritte umfasst,
Bereitstellen einer Trennkammer, die im Querschnitt durch mehrere Rollen definiert ist, worin die Kammer Druck-gesteuert werden kann, und worin mindestens eine der Rollen eine Porenrolle ist, die eine mit Poren versehene Oberfläche aufweist, welche für das Medium durchlässig ist und die weiter mindestens einen Kanal aufweist, um das Filtrat zu dem Filtrat-Auslass zu leiten, worin der Kanal mit den Poren der Oberfläche in Fluidkontakt steht,
Anordnen von mindestens einem Filtermittels, so dass ein Filterkuchen zwischen mindestens einem Satz Rollen geführt wird, worin ein Satz Rollen aus einer Porenrolle und einer anderen Rolle besteht,
Einrichten einer Druckdifferenz über das mindestens eine Filtermittel,
Inkontaktbringen des mindestens einen Filtermittels mit einer Suspension des Trockenguts und des Mediums, wobei Trockengut an dem mindestens einen Filtermittel angereichert wird,
Erhalten eines Filterkuchens an dem Filtermittel, und
Leiten des mindestens einen Filtermittels und des Filterkuchens durch den mindestens einen Satz Rollen, wobei Medium von dem Filterkuchen getrennt wird,
wahlweise Entfernen des Filterkuchens.

2. Verfahren nach Anspruch 1, wobei das Filtermittel mit der Oberfläche der Porenrolle einstückig ausgebildet ist.

3. Verfahren nach Anspruch 1, wobei das Filtermittel ein Filterband ist.

4. Verfahren nach Anspruch 1, wobei das Filtermittel ein Filter ist, der an die Porenrolle angebracht ist.

5. Verfahren nach Anspruch 1, wobei die Suspension in der Trennkammer angeordnet ist und wobei das Medium während der Trennung in die Poren der Porenrolle überführt wird.

6. Verfahren nach Anspruch 1, wobei die Suspension in der Porenrolle angeordnet ist und wobei das Medium während der Trennung in die Trennkammer überführt wird.

7. Verfahren nach einem der vorhergehenden Ansprüche, welches einen weiteren Schritt umfasst, bei dem der mindestens eine Filter mit der Suspension erneut in Kontakt gebracht wird.

8. Verfahren nach einem der vorhergehenden Ansprüche, wobei ein Filterband mindestens einen Teil der Oberfläche der Porenrolle bedeckt, insbesondere wobei ein Filterband die Oberfläche der Porenrolle umgibt.

9. Verfahren nach einem der vorhergehenden Ansprüche, wobei sich der mindestens eine Filter in einer Geschwindigkeit von zwischen 0,2 - 100 Km/Std bewegt, insbesondere zwischen 0,4 - 70 Km/Std, insbesondere zwischen 0,6 - 50 Km/Std, insbesondere zwischen 0,8 - 20 km/Std, insbesondere zwischen 1 - 10 Km/Std, insbesondere zwischen 1,5 - 5 Km/Std.

10. Vorrichtung zur Abtrennung von Trockengut aus einem Medium, welche umfasst,
eine Trennkammer, die im Querschnitt durch mehrere Rollen definiert ist, worin die Kammer Druck-regulierbar ist, und worin mindestens eine der Rollen eine Porenrolle ist, die eine mit Poren versehene Oberfläche aufweist, welche für das Medium durchlässig ist, und die weiter mindestens einen Kanal aufweist, um das Filtrat zu dem Filtrat-Auslass zu leiten, worin der Kanal mit den Poren der Oberfläche in Fluidkontakt steht,
mindestens ein Filtermittel, das derart angeordnet ist, dass es zwischen mindestens einem Satz Rollen gelangt, der aus einer Porenrolle und einer anderen Rolle besteht,
Mittel zum Einrichten einer Druckdifferenz über das mindestens eine Filtermittel,
Mittel zum Inkontaktbringen des mindestens einen Filtermittels mit einer Suspension aus Trockengut und Medium, und
Mittel zum Leiten des mindestens einen Filtermittels und des Filterkuchens durch den mindestens einen Satz Rollen,
wahlweise Mittel zum Entfernen des Filterkuchens.

11. Vorrichtung nach Anspruch 10, worin das Filtermittel ein Filterband ist.

12. Vorrichtung nach Anspruch 11, worin ein Filterband mindestens einen Teil der Oberfläche der Porenrolle bedeckt, insbesondere worin ein Filterband die Oberfläche der Porenrolle umgibt.

13. Vorrichtung nach einem der Ansprüche 10 - 12, worin der Filter eine Durchlässigkeit für Wasser von mindestens 20.000 l/Std/bar/m² aufweist, insbesondere mindestens 30.000 l/Std/bar/m², insbesondere mindestens 40.000 l/Std/bar/m², insbesondere mindestens 50.000 l/Std/bar/m², insbesondere mindestens 60.000 l/Std/bar/m², insbesondere mindestens 70.000 l/Std/bar/m², insbesondere mindestens 80.000 l/Std/bar/m², insbesondere mindestens 90.000 l/Std/bar/m², insbesondere mindestens 100.000 l/Std/bar/m².

14. Vorrichtung nach einem der Ansprüche 11 - 13, worin das Filterband einen Katalysator umfasst.

15. Verwendung des Verfahrens nach einem der Ansprüche 1 - 9 und/oder der Vorrichtung nach einem der Ansprüche 10 - 14 zur Abtrennung von Trockengut aus einem Medium.

## Revendications

1. Procédé pour séparer la matière sèche d'un milieu, comprenant les étapes consistant à :
prévoir une chambre de séparation définie, en coupe, par une pluralité de rouleaux,
dans lequel ladite chambre peut être régulée en pression, et dans lequel au moins l'un desdits rouleaux est un rouleau poreux ayant une surface avec des pores permettant la perméabilité pour le milieu et ayant en outre au moins un canal pour guider le filtrat vers la sortie de filtrat, ledit canal étant en contact de fluide avec les pores de la surface,
agencer au moins un moyen de filtration de sorte qu'un gâteau de filtration passe entre au moins un ensemble de rouleaux, ledit un ensemble de rouleaux se composant d'un rouleau poreux et d'un autre rouleau,
établir une différence de pression sur le au moins un moyen de filtration,
mettre en contact le au moins un moyen de filtration avec une suspension de matière sèche et le milieu accumulant la matière sèche sur le au moins un moyen de filtration,
obtenir un gâteau de filtration sur ledit moyen de filtration, et
faire passer le au moins un moyen de filtration et le gâteau de filtration à travers ledit au moins un ensemble de rouleaux, moyennant quoi le milieu est séparé du gâteau de filtration,
retirer facultativement le gâteau de filtration.

2. Procédé selon la revendication 1, dans lequel le moyen de filtration est intégré avec la surface du rouleau poreux.

3. Procédé selon la revendication 1, dans lequel le moyen de filtration est une courroie de filtration.

4. Procédé selon la revendication 1, dans lequel le moyen de filtration est un filtre fixé sur le rouleau poreux.

5. Procédé selon la revendication 1, dans lequel la suspension est agencée dans la chambre de séparation et le milieu est transporté dans les pores du rouleau poreux pendant la séparation.

6. Procédé selon la revendication 1, dans lequel la suspension est agencée dans le rouleau poreux et le milieu est transporté dans la chambre de séparation pendant la séparation.

7. Procédé selon l'une quelconque des revendications précédentes, comprenant une étape supplémentaire dans laquelle le au moins un filtre est à nouveau en contact avec la suspension.

8. Procédé selon l'une quelconque des revendications précédentes, dans lequel une courroie de filtration recouvre au moins une partie de la surface du rouleau poreux, en particulier une courroie de filtre entourant la surface du rouleau poreux.

9. Procédé selon l'une quelconque des revendications précédentes, dans lequel le au moins un filtre se déplace à une vitesse comprise entre 0,2 et 100 km/h, en particulier entre 0,4 et 70 km/h, en particulier entre 0,6 et 50 km/h, en particulier entre 0,8 et 20 km/h, en particulier entre 1 et 10 km/h, en particulier entre 1,5 et 5 km/h.

10. Appareil pour la séparation de matière sèche d'un milieu, comprenant :
une chambre de séparation définie, en coupe, par une pluralité de rouleaux, dans lequel ladite chambre peut être régulée en pression et dans lequel au moins l'un desdits rouleaux est un rouleau poreux ayant une surface avec des pores permettant la perméabilité pour le milieu, et ayant en outre au moins un canal pour guider le filtrat vers la sortie de filtrat, ledit canal étant en contact de fluide avec les pores de la surface,
au moins un moyen de filtration agencé de sorte qu'il passe entre au moins un ensemble de rouleaux se composant d'un rouleau poreux et d'un autre rouleau,
des moyens pour établir une différence de pression sur le au moins un moyen de filtration,
des moyens pour mettre en contact au moins un moyen de filtration avec une suspension de matière sèche et le milieu, et
des moyens pour faire passer le au moins un moyen de filtration et le gâteau de filtration à travers ledit au moins un ensemble de rouleaux,
facultativement des moyens pour retirer le gâteau de filtration.

11. Appareil selon la revendication 10, dans lequel le moyen de filtration est une courroie de filtration.

12. Appareil selon la revendication 11, dans lequel une courroie de filtration recouvre au moins une partie de la surface du rouleau poreux, en particulier une courroie de filtration entourant la surface du rouleau poreux.

13. Appareil selon l'une quelconque des revendications 10 à 12, dans lequel le filtre présente une perméabilité à l'eau d'au moins 20000 l/h/bar/m², en particulier au moins 30000 l/h/bar/m², en particulier au moins 40000 l/h/bar/m², en particulier au moins 50000 l/h/bar/m², en particulier au moins 60000 l/h/bar/m², en particulier au moins 70000 l/h/bar/m², en particulier au moins 80000 l/h/bar/m², en particulier au moins 90000 l/h/bar/m², en particulier au moins 100000 l/h/bar/m².

14. Appareil selon l'une quelconque des revendications 11 à 13, dans lequel la courroie de filtration comprend un catalyseur.

15. Utilisation du procédé selon les revendications 1 à 9 et/ou de l'appareil selon l'une quelconque des revendications 10 à 14 pour séparer la matière sèche d'un milieu.
